(19)

Europäisches
Patentamt
European
Patent Office
Office européen
des brevets

(11) **EP 4 398 165 A1**

(12) **EUROPEAN PATENT APPLICATION**
published in accordance with Art. 153(4) EPC

(43) Date of publication:
**10.07.2024 Bulletin 2024/28**

(21) Application number: **22862961.4**

(22) Date of filing: **26.07.2022**

(51) International Patent Classification (IPC):
***G06Q 10/08*** (2024.01)     ***G06Q 10/04*** (2023.01)

(52) Cooperative Patent Classification (CPC):
**B65G 1/04; B65G 1/137; G06Q 10/04;**
**G06Q 10/08; G06Q 10/087**

(86) International application number:
**PCT/CN2022/108041**

(87) International publication number:
**WO 2023/029820 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.08.2021 CN 202111015111**

(71) Applicant: **Shenzhen Kubo Software Co., Ltd**
**Shenzhen, Guangdong 518100 (CN)**

(72) Inventor: **YU, Runfang**
**Shenzhen, Guangdong 518100 (CN)**

(74) Representative: **Nederlandsch Octrooibureau**
**P.O. Box 29720**
**2502 LS The Hague (NL)**

(54) **CARGO ARRANGEMENT METHOD AND APPARATUS, AND DEVICE, WAREHOUSING SYSTEM AND STORAGE MEDIUM**

(57)     Embodiments of the present disclosure provide a goods sorting method, apparatus, and device, a warehouse system, and a storage medium. The goods sorting method is applied to a warehouse system. The method includes: determining to-be-delivered goods in a target order, wherein the target order is an order that is to be fulfilled within a predetermined time in the future; determining target warehouse positions of the to-be-delivered goods according to a target operating workstation corresponding to the target order; and when the target warehouse positions of the to-be-delivered goods and storage warehouse positions of the to-be-delivered goods meet a transfer condition, transporting the to-be-delivered goods to corresponding target warehouse positions, where the storage warehouse positions are warehouse positions at which the to-be-delivered goods are currently stored. Inventory management based on orders in a future time is implemented, the accuracy of inventory management is high, and the processing efficiency of orders is improved.

```
┌─────────────────────────────────────────────────────────────┐
│      to-be-delivered goods in a target order are determined  │──── S201
└─────────────────────────────────────────────────────────────┘
                              │
                              ▼
┌─────────────────────────────────────────────────────────────┐
│   a target warehouse position of a piece of to-be-delivered  │──── S202
│   goods is determined according to a target operating        │
│   workstation corresponding to the target order              │
└─────────────────────────────────────────────────────────────┘
                              │
                              ▼
┌─────────────────────────────────────────────────────────────┐
│   when the target warehouse position of the piece of         │──── S203
│   to-be-delivered goods and storage warehouse position of    │
│   the piece of to-be-delivered goods meet a transfer         │
│   condition, the piece of to-be-delivered goods is           │
│   transported to the target warehouse position               │
└─────────────────────────────────────────────────────────────┘
```

FIG. 2

EP 4 398 165 A1

# Description

## CROSS-REFERENCE TO RELATED APPLICATIONS

This application claims priority to Chinese Patent Application No. 202111015111.6, entitled "GOODS SORTING METHOD, APPARATUS, AND DEVICE, WAREHOUSE SYSTEM, AND STORAGE MEDIUM" and filed with the China National Intellectual Property Administration on August 31, 2021, which is incorporated herein by reference in its entirety.

## TECHNICAL FIELD

The present disclosure relates to the field of smart warehouse technologies, and in particular, to a goods sorting method, apparatus, and device, a warehouse system, and a storage medium.

## BACKGROUND

A smart operating system is used in a robot-based warehouse system, which automatically retrieves or stores goods through system instructions. The warehouse system can run continuously for 24 hours, and replace manual management and operations, improve the efficiency of warehousing, and has been widely applied and gained popularity.

In the field of robot-based smart warehousing, a warehouse usually needs to be sorted according to certain cycles or actively, that is, inventory management is performed in advance, thereby improving the delivery efficiency of goods. In related technologies, an inventory management strategy is usually determined based on popularity of goods, so as to sort goods with high popularity to warehouse positions with high delivery efficiency, for example, warehouse positions close to an operating workstation, thereby improving delivery efficiency.

However, when a delivery order includes many goods with low popularity, the delivery efficiency of the order cannot be improved in the foregoing manner.

## SUMMARY

The present disclosure provides a goods sorting method, apparatus, and device, a warehouse system, and a storage medium, to implement a goods sorting strategy in orders, thereby improving the processing efficiency of orders.

According to a first aspect, embodiments of the present disclosure provide a goods sorting method. The method includes: determining to-be-delivered goods in a target order, where the target order is an order that is to be fulfilled within a predetermined time in the future; determining target warehouse positions of the to-be-delivered goods according to a target operating workstation corresponding to the target order; and when the target warehouse positions of the to-be-delivered goods and storage warehouse positions of the to-be-delivered goods meet a transfer condition, transporting the to-be-delivered goods to corresponding target warehouse positions, where the storage warehouse positions are warehouse positions at which the to-be-delivered goods are currently stored.

Optionally, the determining target warehouse positions of the to-be-delivered goods according to a target operating workstation corresponding to the target order includes: a warehouse position score of each warehouse position of a warehouse system according to the target operating workstation; and determining the target warehouse positions of the to-be-delivered goods according to the warehouse position score of each warehouse position.

Optionally, the determining a warehouse position score of each warehouse position of a warehouse system according to the target operating workstation includes: calculating a first distance between each warehouse position of the warehouse system and the target operating workstation; and determining the warehouse position score of each warehouse position according to the first distance.

Optionally, the determining the warehouse position score of each warehouse position according to the first distance includes: determining the warehouse position score of each warehouse position according to the first distance and warehouse position height of each warehouse position.

Optionally, the determining a warehouse position score of each warehouse position of a warehouse system according to the target operating workstation includes: calculating a second distance between a roadway exit of each roadway of the warehouse system and the target operating workstation, wherein each roadway is a passage that is between two adjacent storage shelving units and is used for a robot to walk, and each storage shelving unit comprises one or more warehouse positions configured to store goods; acquiring a first quantity of target warehouse positions in each roadway; determining a roadway score of each roadway according to the corresponding second distance and the first quantity; and for each warehouse position, determining a warehouse position score of the warehouse position according to a roadway score of a roadway corresponding to the warehouse position and a distance between the warehouse position and a roadway exit of the corresponding roadway.

Optionally, the determining target warehouse positions of the to-be-delivered goods according to a target operating workstation corresponding to the target order includes: calculating a second distance between a roadway exit of each roadway and the target operating workstation; f for each roadway, determining a first score of each warehouse position in the roadway according to the third distance between each warehouse position in the roadway and a roadway exit of the roadway; and repeating the following steps, until the target warehouse positions of all the to-be-delivered goods corresponding to the target order are determined: acquiring a first quantity of target warehouse positions in each roadway; determining a roadway score of each roadway according to the second distance and the first quantity; and for a current target roadway with the highest roadway score, determining, from warehouse positions in the target roadway that are not determined as target warehouse positions in a descending order of the first scores, a preset quantity of warehouse positions as a preset quantity of target warehouse positions of the to-be-delivered goods, and updating the first quantity for the target roadway according to the preset quantity, wherein the preset quantity is a quantity of layers of temporary storage shelving units of a robot.

Optionally, the determining target warehouse positions of the to-be-delivered goods corresponding to the target order according to a target operating workstation corresponding to the target order includes: calculating a second distance between a roadway exit of each roadway and the target operating workstation; determining a congestion coefficient of each roadway; determining a roadway score of each roadway according to the corresponding second distance and the corresponding congestion coefficient; for each roadway, determining a first score of each warehouse position in a roadway according to a third distance between the corresponding warehouse position in the roadway and the roadway exit of the roadway; and determining the target warehouse position of each to-be-delivered goods in the target order according to the first score of the corresponding warehouse position and the roadway score of the corresponding roadway.

Optionally, the determining the target warehouse position of each to-be-delivered goods in the target order according to the corresponding first score of the warehouse position and the corresponding roadway score of the roadway includes: sequentially determining, in descending order of roadway scores, first warehouse positions of each roadway as the target warehouse positions of the to-be-delivered goods in the target order, wherein each first warehouse position is a warehouse position whose first score is greater than a preset score.

Optionally, the sequentially determining, in descending order of roadway scores, first warehouse positions of each roadway as the target warehouse positions of the to-be-delivered goods in the target order includes: sequentially determining, in descending order of roadway scores and descending order of the first scores in the roadways, a corresponding quantity of first warehouse positions as the target warehouse positions of the to-be-delivered goods in the target order, and ignoring a roadway whose quantity of the first warehouse positions is 0.

Optionally, after the sequentially determining, in descending order of roadway scores, first warehouse positions of each roadway as the target warehouse positions of the to-be-delivered goods in the target order, the method further includes: acquiring to-be-delivered goods in a next target order; updating the congestion coefficient of each first roadway according to quantities of target warehouse positions in the first roadway, where the first roadway is a roadway that is among the roadways and in which at least one warehouse position is determined as a target warehouse position; updating the roadway score of each first roadway according to the corresponding second distance and the updated congestion coefficient of the corresponding first roadway; and sequentially determining, in descending order of roadway scores, the first warehouse positions of each roadway as the target warehouse positions of the to-be-delivered goods corresponding to the next target order.

Optionally, the method further includes: determining warehouse-position types of the to-be-delivered goods.

Correspondingly, the determining target warehouse positions of the to-be-delivered goods according to a target operating workstation corresponding to the target order includes: determining, according to the target operating workstation corresponding to the target order and the warehouse-position types of the to-be-delivered goods, the target warehouse positions matching the warehouse-position types of the to-be-delivered goods.

Optionally, the determining, according to the target operating workstation corresponding to the target order and the warehouse-position types of the to-be-delivered goods, the target warehouse positions matching the warehouse- position types of the to-be-delivered goods includes: for to-be-delivered goods of a same warehouse-position type, determining candidate warehouse positions matching the warehouse-position type; determining warehouse position scores of the candidate warehouse positions according to the target operating workstation; and sequentially determining, in descending order of the warehouse position scores, the candidate warehouse positions as the target warehouse positions of the to-be-delivered goods.

Optionally, the method further includes: determining an allocation sequence of the to-be-delivered goods corresponding to the target order, so as to sequentially allocate the target warehouse positions to the to-be-delivered goods in the target order based on the allocation sequence.

Optionally, that the target warehouse positions of the to-be-delivered goods and storage warehouse positions of the to-be-delivered goods meet a transfer condition includes: a target warehouse position of a piece of to-be-delivered goods and a storage warehouse position of the piece of to-be-delivered goods are not in a same roadway; or a target warehouse position of a piece of to-be-delivered goods exceed a preset range of a storage warehouse position of the piece of to-be-delivered goods; or a target warehouse position of a piece of to-be-delivered goods and a storage warehouse position of the piece of to-be-delivered goods are not a same warehouse position.

Optionally, the determining to-be-delivered goods in a target order includes: determining the to-be-delivered goods in the target order according to an order requirement of the target order and the target operating workstation corresponding to the target order.

Optionally, the method further includes: determining the target operating workstation of the target order according to a production line corresponding to the target order.

Optionally, when a target warehouse position is occupied by a piece of occupying goods, the method further includes: controlling the robot to take out the piece of occupying goods from the target warehouse position.

Correspondingly, the transporting the to-be-delivered goods to corresponding target warehouse positions includes: after the piece of occupying goods is taken out, controlling the robot to store a piece of to-be-delivered goods at the target warehouse position.

Optionally, after the piece of to-be-delivered goods is stored at the target warehouse position, the method further includes: allocating a new warehouse position to the piece of occupying goods, so as to store the piece of occupying goods at the new warehouse position.

According to a second aspect, embodiments of the present disclosure further provide a goods sorting apparatus. The apparatus includes: a goods determining module, configured to determine to-be-delivered goods in a target order, wherein the target order is an order that is to be fulfilled within a predetermined time in the future; a warehouse position determining module, configured to determine target warehouse positions of the to-be-delivered goods according to a target operating workstation corresponding to the target order; and a goods transporting module, configured to: when the target warehouse positions of the to-be-delivered goods and storage warehouse positions of the to-be-delivered goods are inconsistent, transport the to-be-delivered goods to corresponding target warehouse positions.

According to a third aspect, embodiments of the present disclosure further provide a goods sorting device, including: a memory configured to store computer-executable instructions and at least one processor configured to execute the computer-executable instructions stored in the memory, where when the computer-executable instructions are executed by the processor, processor is configured to perform the goods sorting method provided in any embodiment corresponding to the first aspect of the present disclosure.

According to a fourth aspect, embodiments of the present disclosure further provide a warehouse system, including: a warehouse shelving unit, an operating workstation, a robot, and the goods sorting device provided in the embodiment corresponding to the third aspect of the present disclosure.

According to a fifth aspect, embodiments of the present disclosure further provide a computer-readable storage medium. The computer-readable storage medium stores computer-executable instructions, and a processor, when executing the computer-executable instructions, implements the goods sorting method provided in any embodiment corresponding to the first aspect of the present disclosure.

According to a sixth aspect, embodiments of the present disclosure further provide a computer program product, including a computer program, where the computer program, when being executed by a processor, implements the goods sorting method provided in any embodiment corresponding to the first aspect of the present disclosure.

For the goods sorting method, apparatus, and device, the warehouse system, and the storage medium provided in the embodiments of the present disclosure, for a target order in a future preset time period, according to a target operating workstation corresponding to the target order, target warehouse positions of to-be-delivered goods corresponding to the target order are determined, so that when the target warehouse positions and original warehouse positions of the to-be-delivered goods meet a transfer condition, the to-be-delivered goods are carried in advance to corresponding target warehouse positions, to implement beforehand inventory management in orders. Because inventory management is performed based on future orders, the accuracy of inventory management is improved. Through beforehand inventory management, to-be-delivered goods corresponding to an order can be delivered more quickly, so that a processing time of the order is reduced, thereby improving the processing efficiency of future orders.

## BRIEF DESCRIPTION OF THE DRAWINGS

The accompanying drawings herein are incorporated into the specification and constitute a part of the present disclosure, show embodiments that conform to this application, and are used for describing a principle of this application together with the present disclosure.

FIG. 1 is a diagram of an application scenario of a goods sorting method according to embodiments of the present disclosure;
FIG. 2 is a flowchart of a goods sorting method according to an embodiment of the present disclosure;
FIG. 3 is a flowchart of a goods sorting method according to another embodiment of the present disclosure;
FIG. 4 is a flowchart of step S303 in the embodiment shown in FIG. 3 according to the present disclosure;
FIG. 5 is a flowchart of a goods sorting method according to another embodiment of the present disclosure;
FIG. 6 is a flowchart of step S503 in the embodiment shown in FIG. 5 according to the present disclosure;
FIG. 7 is a flowchart of a goods sorting method according to another embodiment of the present disclosure;
FIG. 8 is a flowchart of a goods sorting method according to another embodiment of the present disclosure;

FIG. 9 is a flowchart of a goods sorting method according to another embodiment of the present disclosure;

FIG. 10 is a schematic structural diagram of a goods sorting apparatus according to an embodiment of the present disclosure;

FIG. 11 is a schematic structural diagram of a goods sorting device according to an embodiment of the present disclosure; and

FIG. 12 is a schematic structural diagram of a warehouse system according to an embodiment of the present disclosure.

Definite embodiments of the present disclosure have been shown by means of the above accompanying drawings, which will be described in greater detail later. These accompanying drawings and textual descriptions are not intended to limit the scope of the concept of the present disclosure in any way, but rather to illustrate the concepts of the present disclosure for those skilled in the art with reference to particular embodiments.

**DETAILED DESCRIPTION**

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. Implementations described in the following exemplary embodiments do not represent all implementations consistent with the present disclosure. On the contrary, the implementations are merely examples of an apparatus and a method that are consistent with some aspects of the present disclosure described in detail in claims.

The following describes the technical solutions of the present disclosure and how to resolve the foregoing technical problems according to the technical solutions of the present disclosure in detail by using specific embodiments. The following several specific embodiments may be combined with each other, and the same or similar concepts or processes may not be described repeatedly in some embodiments. The following describes the embodiments of the present disclosure with reference to the accompanying drawings.

An application scenario in the embodiments of the present disclosure is described below:

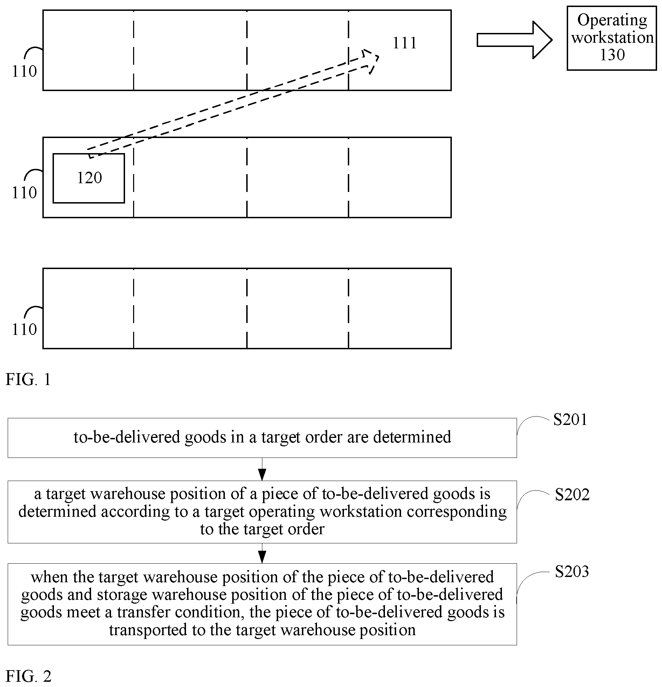

FIG. 1 is a diagram of an application scenario of a goods sorting method according to embodiments of the present disclosure. As shown in FIG. 1, the goods sorting method provided in the embodiments of the present disclosure may be performed by a goods sorting device. The goods sorting device may be a scheduling device of a warehouse system, and a form of the goods sorting device may be a computer or server. In the warehouse system, to improve the delivery efficiency of goods 120, inventory management usually needs to be performed on the goods 120 stored on shelving units 110 of the warehouse system, that is, positions of the goods 120 need to be adjusted.

In related technologies, inventory management is usually performed based on popularity of the goods 120. The popularity is a parameter used for describing a delivery frequency of goods. When the popularity is higher, the delivery frequency of the goods is higher. Specifically, goods 120 with high popularity may be placed at a good warehouse position, for example, a warehouse position that is close to an operating workstation 130 or close to a roadway exit, for example, a warehouse position 111. The goods 120 may be transferred in a direction corresponding to a dashed arrow in FIG. 1 to the warehouse position 111, to improve the delivery efficiency of goods with high popularity, so that the goods 120 can be carried to the operating workstation 130 more efficiently.

However, the manner of performing inventory management only based on popularity of goods usually can only improve the delivery efficiency of goods with high popularity. When to-be-delivered goods corresponding to an order are all goods with low popularity, in the manner of popularity-based inventory management in the related technologies, the goods in the order are usually not sorted, that is, warehouse positions of the goods remain unchanged, or even the goods are carried to poor warehouse positions. As a result, the delivery efficiency of the goods corresponding to the order cannot be improved, the processing efficiency of the order is low, and requirements fail to be met.

To improve the efficiency of delivering goods and processing orders, embodiments of the present disclosure provide a goods sorting method. The main concept of the method is that in a case that a future order is known, based on a target operating workstation corresponding to the future order, target warehouse positions of to-be-delivered goods in the future order are determined. When the target warehouse positions and original warehouse positions of the to-be-delivered goods meet a transfer condition, the to-be-delivered goods are transported to the target warehouse positions, to implement an inventory management strategy based on the future order, thereby improving the accuracy of inventory management, so that the to-be-delivered goods in the future order are sorted to good warehouse positions, delivery efficiency of the to-be-delivered goods is improved, and the processing efficiency of the future order is improved.

FIG. 2 is a flowchart of a goods sorting method according to an embodiment of the present disclosure. As shown in FIG. 2, the goods sorting method is applicable to a warehouse system. The goods sorting method may be performed by a goods sorting device. The goods sorting method provided in this embodiment includes the following steps.

Step S201: to-be-delivered goods in a target order are determined.

The target order is an order that is to be fulfilled within a predetermined time in the future. That is, the target order is not a currently processed order, but instead is an order that needs to be processed in a preset time period in the future. The to-be-delivered goods are goods that are in the target order and need to be delivered. The future preset time period may be the next 24 hours, the next 12 hours, or the like.

Specifically, one or more orders in the preset time period in the future may be determined according to order-taking information of the warehouse system, for example, order-taking information sent by an order-taking device. That is, one or more target orders are determined. For each target order, according to an order requirement of the target order, one or more pieces of to-be-delivered goods in the target order are determined.

Specifically, the order requirement of the target order may indicate goods that need to be delivered, for example, include goods identifiers of the to-be-delivered goods, and the to-be-delivered goods in the target order are determined based on the goods identifiers corresponding to the order requirement of the target order.

Further, the order requirement of the target order may indicate articles that need to be delivered and quantities of the articles, and the articles are usually stored in goods or cargo containers. Further, the to-be-delivered goods in the target order are determined according to the articles that need to be delivered and the quantities of the articles in the order requirement of the target order, to meet the order requirement of the target order.

One type of articles or a plurality of types of articles may be stored in one cargo container or one piece of goods in the warehouse system.

For example, it is assumed that the order requirement of the target order is to deliver 100 pairs of socks W1 and 50 pieces of clothing C 1. A storage status of cargo containers holding the socks W1 or the clothing C1 on shelving units of the warehouse system is as follows: 30 pairs of socks W1 and 26 pieces of clothing C1 are stored in a cargo container H01; 87 pairs of socks W1 are stored in a cargo container H05; and 20 pairs of socks W1 and 60 pieces of clothing C1 are stored in a cargo container H16. It may be determined that the to-be-delivered goods corresponding to the target order are the cargo container H05 and the cargo container H16.

Specifically, an inventory management task may be triggered after processing of orders of a current day is completed or at a specific time every day, to acquire target orders that need to be processed the next day. For each target order, to-be-delivered goods in the target order are determined, or the target orders that need to be processed the next day may be considered as one target order, to acquire to-be-delivered goods of the target order.

The inventory management or the inventory management task discussed in the present disclosure refers to a process of reallocating warehouse positions to corresponding goods, for example, the to-be-delivered goods, and transporting the goods to the reallocated warehouse positions.

Step S202: a target warehouse position of a piece of to-be-delivered goods is determined according to a target operating workstation corresponding to the target order.

The target operating workstation is one or more operating workstations that process or are planned to process the to-be-delivered goods of the target order. The target warehouse positions are new warehouse positions for the to-be-delivered goods, and may be different from original warehouse positions at which the to-be-delivered goods are stored.

In some embodiments, every time one order is generated, one or more corresponding operating workstations may be determined for the order, so that corresponding operating workstations process the goods corresponding to the order.

Specifically, the target warehouse positions of the to-be-delivered goods may be determined from warehouse positions with a distance from the target operating workstation being smaller than or equal to a preset distance. The distance between a warehouse position and the target operating workstation may be the shortest distance by which a robot walks to move from the target operating workstation to the warehouse position, or a distance by which the robot walks to move from the warehouse position to the target operating workstation.

Further, the target warehouse positions of the to-be-delivered goods may be determined from the warehouse positions according to the distances between the warehouse positions and the target operating workstation and roadways to which the warehouse positions belong, so that the target warehouse positions of the to-be-delivered goods of the target order are close to the target operating workstation and quantities of the target warehouse positions corresponding to the roadways close to the target operating workstation are as uniform as possible.

In some embodiments, the target warehouse positions of the to-be-delivered goods may be determined from vacant warehouse positions with a distance from the target operating workstation being smaller than or equal to a preset distance. If a quantity of vacant warehouse positions with a distance from the target operating workstation being smaller than or equal to the preset distance is less than a quantity of the to-be-delivered goods, target warehouse positions of the remaining to-be-delivered goods are then determined from occupied warehouse positions with a distance from the target operating workstation being smaller than or equal to the preset distance. In this way, a quantity of goods that need to be carried during inventory management is reduced, the workload of the robot is reduced, and the efficiency of inventory management is improved.

Optionally, when there are a plurality of pieces of to-be-delivered goods, the method further includes: determining an allocation sequence of the to-be-delivered goods in the target order, to sequentially allocate target warehouse positions to the to-be-delivered goods in the target order based on the allocation sequence.

In some embodiments, the allocation sequence of the to-be-delivered goods may be randomly determined.

In some embodiments, the allocation sequence of the to-be-delivered goods may be determined according to goods priorities of the to-be-delivered goods. When a goods priority is higher, the to-be-delivered goods are closer to the top in the allocation sequence.

The goods priority may be determined according to parameters such as articles stored in the to-be-delivered goods, a quantity of the articles, a goods dimension, and the like. The goods dimension may include one or more of a height, a width, a length, a volume, and the like of the to-be-delivered goods.

Specifically, the goods priority of the to-be-delivered goods may have a positive correlation relationship with a priority of the articles stored in the to-be-delivered goods, the quantity of the articles, and the goods dimension. That is, when the priority of the articles stored in the to-be-delivered goods is higher, the goods priority of the to-be-delivered goods is higher. When the quantity of the articles stored in the to-be-delivered goods is larger, the goods priority of the to-be-delivered goods is higher. When the goods dimension is larger, the goods priority of the to-be-delivered goods is higher.

Further, weights may be set for the parameters such as the articles stored in the to-be-delivered goods, the quantity of the articles, the goods dimension, and the like, so that the goods priority of the to-be-delivered goods is determined based on a weighted average value of the parameters such as the articles stored in the to-be-delivered goods, the quantity of the articles, the goods dimension, and the like.

Specifically, after the allocation sequence of the to-be-delivered goods is determined, the target warehouse position may be sequentially allocated to each piece of to-be-delivered goods based on the allocation sequence, that is, the target warehouse position of each piece of to-be-delivered goods is sequentially determined.

Step S203: when the target warehouse position of the piece of to-be-delivered goods and storage warehouse position of the piece of to-be-delivered goods meet a transfer condition, the piece of to-be-delivered goods is transported to the target warehouse position.

The storage warehouse position is a warehouse position at which the piece of to-be-delivered goods is currently stored, and the storage warehouse position is the original warehouse positions of the piece of to-be-delivered goods. The transfer condition may be preset, and is a condition used for determining whether to move the to-be-delivered goods.

Specifically, after the target warehouse positions of the to-be-delivered goods in the target order are determined, for each piece of to-be-delivered goods, it may be determined whether a target warehouse position corresponding to the piece of to-be-delivered goods and a storage warehouse position of the piece of to-be-delivered goods meet the transfer condition. If not, it is determined that the storage warehouse position of the piece of to-be-delivered goods is the target warehouse position of the piece of to-be-delivered goods, and it is not necessary to move the piece of to-be-delivered goods. If yes, the robot is controlled to transport the piece of to-be-delivered goods to the corresponding target warehouse position.

Optionally, that the target warehouse positions of the to-be-delivered goods and storage warehouse positions of the to-be-delivered goods meet a transfer condition includes:
a target warehouse position of a piece of to-be-delivered goods and a storage warehouse position of the piece of to-be-delivered goods are not in the same roadway; or a target warehouse position of a piece of to-be-delivered goods exceed a preset range of a storage warehouse position of the piece of to-be-delivered goods; or a target warehouse position of a piece of the to-be-delivered goods and a storage warehouse position of the piece of to-be-delivered goods are not a same warehouse position.

Specifically, when the target warehouse position of the piece of to-be-delivered goods and the storage warehouse position of the piece of to-be-delivered goods are not a same warehouse position, the robot may be controlled to transport the piece of to-be-delivered goods to corresponding target warehouse position.

Specifically, when a warehouse position distance between the target warehouse position of the piece of to-be-delivered goods and the storage warehouse position of the piece of to-be-delivered goods exceeds a preset range, the robot may be controlled to transported the piece of to-be-delivered goods to corresponding target warehouse positions.

The preset range may be a range that the target warehouse position and the storage warehouse position are in a same roadway and a distance between the target warehouse position and the storage warehouse position is less than a first threshold.

Further, when the target warehouse position of the piece of to-be-delivered goods and the storage warehouse position of the piece of to-be-delivered goods do not meet the transfer condition, the storage warehouse position of the piece of to-be-delivered goods is determined as the target warehouse positions of the to-be-delivered goods.

For example, the first threshold may be a distance corresponding to two warehouse positions. For example, the target warehouse position of the piece of to-be-delivered goods is the storage warehouse position of the piece of to-be-delivered goods or warehouse position next to the original warehouse position, a transfer condition is not met. The piece of to-be-delivered goods do not need to be transported, and are still stored at the storage warehouse position of the piece of to-be-delivered goods, and the storage warehouse position of the piece of to-be-delivered goods is determined as the target warehouse position of the piece of to-be-delivered goods.

For the goods sorting method provided in the embodiments of the present disclosure, for a target order that is to be fulfilled within a predetermined time in the future, according to a target operating workstation corresponding to the target order, target warehouse positions of to-be-delivered goods in the target order are determined, so that when the target warehouse positions and original warehouse positions of the to-be-delivered goods meet a transfer condition, the to-be-delivered goods are transported in advance to corresponding target warehouse positions, to implement beforehand inventory management in orders. Because inventory management is performed based on future orders, the accuracy of inventory management is improved. Through beforehand inventory management, to-be-delivered goods corresponding to an order can be delivered more quickly, so that a processing time of the order is reduced, thereby improving the processing efficiency of future orders.

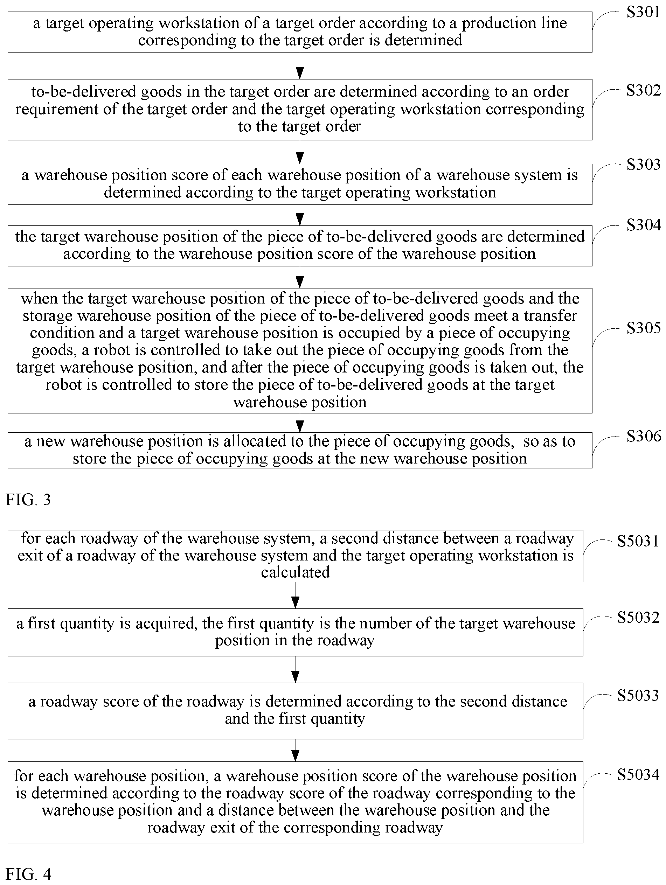

Optionally, FIG. 3 is a flowchart of a goods sorting method according to another embodiment of the present disclosure. This embodiment further limits step S201 and step S202 on the basis of the embodiment shown in FIG. 2. A step of determining the target operating workstation is added before step S201. As shown in FIG. 3, the goods sorting method provided in this embodiment may include the following steps.

Step S301: a target operating workstation of a target order according to a production line corresponding to the target order is determined.

In some embodiments, after being picked or packed at an operating workstation, goods in some orders further need to be transported to a production line for further processing, for example, adding outer packing, a manual, and the like.

Specifically, one production line usually corresponds to one or more operating workstations, and one or more operating workstations corresponding to a production line corresponding to the target order may be determined as the target operating workstations.

Further, statistics of corresponding operating workstations of the production line corresponding to the target order in a historical time may be collected, so as to determine use frequencies of operating workstations corresponding to the production line corresponding to the target order. Furthermore, an operating workstation that corresponds to the production line corresponding to the target order and that has the highest use frequency may be determined as the target operating workstation of the target order. Alternatively, operating workstations whose use frequency is greater than a preset frequency and that correspond to the production lines corresponding to the target orders may be determined as the target operating workstations of the target orders.

Further, the target operating workstation of the target order may be estimated based on operating workstations corresponding to historical orders of the production line corresponding to the target order, a processing time of the historical orders, and a pre-established neural network model.

Step S302: to-be-delivered goods in the target order are determined according to an order requirement of the target order and the target operating workstation corresponding to the target order.

Specifically, after the target operating workstation is determined, the to-be-delivered goods in the target order may be determined according to a storage status of the warehouse system, the order requirement of the target order, and the target operating workstation corresponding to the target order, so that the quantity of the to-be-delivered goods is reduced as much as possible, and in addition, distances between the storage warehouse positions of the to-be-delivered goods and the target operating workstation are as small as possible.

Specifically, candidate goods sets that meet the order requirement may be determined according to the order requirement of the target order and the storage status of the warehouse system. Each candidate goods set may include one or more pieces of goods stored on a shelving unit. For each candidate goods set, fourth distances between storage warehouse positions of goods in the candidate goods set and the target operating workstation are calculated, and goods in a candidate goods set with a sum of fourth distances corresponding to goods corresponding to a candidate goods set being minimum are determined as the to-be-delivered goods.

Step S303: a warehouse position score of each warehouse position of a warehouse system is determined according to the target operating workstation.

The warehouse position score is used for describing delivery efficiency of each warehouse position. When a score of a warehouse position is higher, delivery efficiency is higher.

Specifically, the warehouse position score of the warehouse position may be determined according to a position of the warehouse position and a position of the target operating workstation.

Optionally, the determining a warehouse position score of each warehouse position of a warehouse system according to the target operating workstation includes:

for each warehouse position, calculating a first distance between the warehouse position of the warehouse system and the target operating workstation; and determining the warehouse position score of the warehouse position according to the first distance.

The first distance may be the shortest walking distance required for the robot to walk from the target operating workstation to a warehouse position. The warehouse position score may have a negative correlation relationship with the first distance. That is, when a first distance corresponding to a warehouse position is smaller, a warehouse position score of the warehouse position is higher.

Specifically, the first distance between each warehouse position and the target operating workstation may be calculated according to position of each warehouse position and a position of the target operating workstation.

Specifically, a first correspondence relationship between the first distance and the warehouse position score may be pre-established, and the calculated first distance of each warehouse position is further introduced into the first correspondence relationship, to determine the warehouse position score of each warehouse position.

Optionally, the determining the warehouse position score of each warehouse position according to the first distance includes:

determining the warehouse position score of the warehouse position according to the first distance and a warehouse position height of the warehouse position.

The warehouse position height of a warehouse position may be represented by a quantity of layers of a shelving unit on which the warehouse position is located.

Specifically, a second correspondence relationship among the first distance, the warehouse position height, and the warehouse position score may be established. Furthermore, the warehouse position score of each warehouse position is determined based on the second correspondence relationship, the first distance corresponding to the warehouse position, and the warehouse position height of each warehouse positions.

For example, the second correspondence relationship may be:

$$S_i = \begin{cases} \frac{a}{d1_i} + b, l_i \leq L \\ \frac{a}{d1_i} + b - c \times (l_i - L), l_i > L \end{cases}.$$

$S_i$ is a warehouse position score of an $i$th warehouse position. $d1_i$ is a first distance corresponding to the $i$th warehouse position. $l_i$ is a quantity of layers of a shelving unit on which the $i$th warehouse position is located. $a, b,$ and c are set constants. $L$ is a preset height, and a value of L may be determined according to a quantity of layers of a temporary storage shelving unit of the robot.

Optionally, FIG. 4 is a flowchart of step S303 in the embodiment shown in FIG. 3 according to the present disclosure. As shown in FIG. 4, step S303 may include the following steps.

Step S3031: for each roadway of the warehouse system, a second distance between a roadway exit of a roadway of the warehouse system and the target operating workstation is calculated.

Each roadway is a passage that is between two adjacent storage shelving units and is used for a robot to walk. Each storage shelving unit includes one or more warehouse positions configured to store goods. The roadway exit is an exit of each roadway. After taking out goods from the roadway or placing goods in the roadway, the robot leaves the roadway through the roadway exit of the roadway. The second distance is used for describing the shortest walking distance for the robot to walk from the roadway exit to the target operating workstation.

Specifically, the second distance between a roadway exit of each roadway of the warehouse system and the operating workstation may be pre-calculated, the first distance between each warehouse position and the operating workstation may be calculated, and a warehouse map of the warehouse system is generated based on the second distances between the roadways and the operating workstations and the first distances between the warehouse positions and the operating workstations. After the target operating workstation is determined, the warehouse map is initialized based on the target operating workstation, to obtain the second distances between the roadway exits of the roadways and the target operating workstation and the first distances between the warehouse positions and the target operating workstation.

Step S3032: a first quantity is acquired, the first quantity is the number of the target warehouse position in the roadway.

The first quantity is used for describing a quantity of warehouse positions of the roadway that have been determined as the target warehouse positions at a current moment.

Step S3033: a roadway score of the roadway is determined according to the second distance and the first quantity.

Specifically, the roadway score may have a negative correlation relationship with the second distance. That is, when a second distance corresponding to a roadway is shorter, a roadway score of the roadway is higher.

Specifically, the roadway score may have a negative correlation relationship with the first quantity. That is, when a first quantity corresponding to a roadway is smaller, a roadway score of the roadway is higher.

Further, a third correspondence relationship among the second distance, the first quantity, and the roadway score may be pre-established, and the roadway scores of the roadways are further determined based on the third correspondence relationship, the second distances corresponding to the roadways, and the first quantity.

Step S3034: for each warehouse position, a warehouse position score of the warehouse position is determined according to the roadway score of the roadway corresponding to the warehouse position and a distance between the warehouse position and the roadway exit of the corresponding roadway.

The distance between the warehouse position and a roadway exit of the corresponding roadway may be represented by a horizontal distance between the warehouse position and the roadway exit of the corresponding roadway, or represented by the shortest distance by which the robot walks to move from the corresponding warehouse position to the roadway exit.

Specifically, for each warehouse position, the warehouse position score of the warehouse position may be calculated according to a roadway score of a roadway to which the warehouse position belongs and a distance between the warehouse position and the roadway exit of the roadway to which the warehouse position belongs. That is, the warehouse position score is affected by two factors, that is, the roadway score of the roadway to which the warehouse position belongs and the distance between the warehouse position and the roadway exit of the roadway to which the warehouse position belongs.

Further, a fourth correspondence relationship among the warehouse position score, the roadway score, and the distance between the warehouse position and the roadway exit of the roadway to which the warehouse position belongs may be pre-established, and a warehouse position score of a current warehouse position is further determined based on the fourth correspondence relationship, a roadway score of a roadway to which the current warehouse position belongs, and a distance between the current warehouse position and the roadway exit of the roadway to which the warehouse position belongs. The warehouse position score may have a positive correlation relationship with the roadway score, and have a negative correlation relationship with the distance between the warehouse position and the roadway exit of the roadway to which the warehouse position belongs.

Step S304: the target warehouse position of the piece of to-be-delivered goods are determined according to the warehouse position score of the warehouse position.

Specifically, the warehouse positions may be sequentially determined as the target warehouse positions of the to-be-delivered goods in descending order of the warehouse position scores.

After the allocation sequence of the to-be-delivered goods is determined, a warehouse position with the highest warehouse position score may be determined as a target warehouse position of the first piece of to-be-delivered goods in the allocation sequence, and a warehouse position with the second highest warehouse position score may be determined as a target warehouse position of the second piece of to-be-delivered goods in the allocation sequence, and the like, to determine the target warehouse positions of the to-be-delivered goods of the target order.

Specifically, the warehouse positions may be sorted in descending order of warehouse position scores, to obtain a warehouse position sorting result, and the first to $N^{th}$ warehouse positions in the warehouse position sorting result are sequentially determined as target warehouse positions of the first to $N^{th}$ pieces of to-be-delivered goods in the allocation sequence, where N is the quantity of the to-be-delivered goods.

Further, the target warehouse positions of the to-be-delivered goods may be determined according to the storage status and the warehouse position scores of the warehouse positions, to preferentially determine vacant warehouse positions with high warehouse position scores as the target warehouse positions of the to-be-delivered goods.

The storage status of a warehouse position includes "vacant" and "occupied". "Vacant" represents that no article is stored at a warehouse position, and the warehouse position is a vacant warehouse position. "Occupied" represents that an occupying article, for example, another piece of goods, is stored at a warehouse position.

Step S305: when the target warehouse position of the piece of to-be-delivered goods and the storage warehouse position of the apiece of to-be-delivered goods meet a transfer condition and a target warehouse position is occupied by a piece of occupying goods, a robot is controlled to take out the piece of occupying goods from the target warehouse position, and after the piece of occupying goods is taken out, the robot is controlled to store the piece of to-be-delivered goods at the target warehouse positions.

The occupying goods at the target warehouse positions are usually other goods, for example, other cargo containers.

When a target warehouse position of the to-be-delivered goods and a storage warehouse position of the to-be-delivered goods meet the transfer condition, it may be determined whether a piece of occupying goods exists at the target warehouse position. If not, after the target warehouse position of the piece of to-be-delivered goods are determined, the piece of to-be-delivered goods is transported to the corresponding target warehouse positions. If yes, after the target warehouse position of the piece of to-be-delivered goods is determined, the robot is controlled to take out the piece of occupying goods that exist on the target warehouse position, and a robot, for example, another robot, is further controlled to place the piece of to-be-delivered goods at the target warehouse position.

Specifically, after the target warehouse positions of the to-be-delivered goods corresponding to the target order are determined, the storage status of the target warehouse positions may be determined. For the target warehouse positions at which occupying goods exist, a first task of the robot is generated, so that the robot takes out the occupying goods at the target warehouse positions according to the first task. For each target warehouse position, when the target warehouse position is a vacant warehouse position or after the piece of occupying goods at the target warehouse position is taken out, the robot is controlled to move the piece of to-be-delivered goods corresponding to the target warehouse position to the target warehouse position, to implement sorting of to-be-delivered goods corresponding to target orders in a future preset time period, thereby implementing inventory management of the warehouse system.

Step S306: a new warehouse position is allocated to the piece of occupying goods, so as to store the piece of occupying goods at the new warehouse position.

For occupying goods that are taken out from the target warehouse positions, new warehouse positions need to be reallocated to the occupying articles. Specifically, new warehouse positions of the occupying articles may be determined from vacant warehouse positions in the warehouse system.

Specifically, new warehouse positions of the occupying articles may be determined according to the target warehouse positions corresponding to the occupying articles, that is, warehouse positions at which the occupying articles are stored before the occupying articles are taken out and the vacant warehouse positions in the warehouse system, to reduce a distance by which the robot walks to store all the occupying goods at the corresponding new warehouse positions.

In this embodiment, after the target operating workstation corresponding to the target order is determined, based on the target operating workstation and the order requirement of the target order, the to-be-delivered goods that meet the order requirement of the target order are determined, and the to-be-delivered goods are as close as possible to the target operating workstation, to reduce a task amount corresponding to inventory management, thereby improving the efficiency of inventory management. Furthermore, scores of the warehouse positions are calculated according to the position of the target operating workstation, the target warehouse positions of the to-be-delivered goods are sequentially determined in descending order of warehouse position scores, and when the transfer condition is met, the to-be-delivered goods are transferred from the original warehouse positions to the corresponding target warehouse positions, so that after inventory management, the to-be-delivered goods are placed at warehouse positions with higher delivery efficiency, and the processing efficiency of the order is improved during processing of the target order. When occupying articles exist at the target warehouse positions, after the occupying articles are taken out, the corresponding to-be-delivered goods need to be placed at the target warehouse positions, and warehouse positions are not reallocated to the occupying articles, to appropriately arrange the occupying articles.

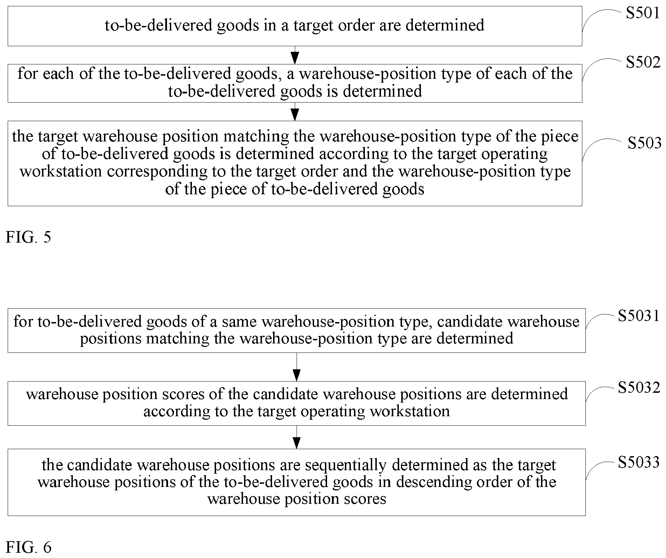

FIG. 5 is a flowchart of a goods sorting method according to another embodiment of the present disclosure. This embodiment further limits step S202 on the basis of the embodiment shown in FIG. 2, and a step of determining the warehouse position types of the to-be-delivered goods is added after step S201. As shown in FIG. 5, the goods sorting method provided in this embodiment may include the following steps.

Step S501: to-be-delivered goods in a target order are determined.

Step S502: for each of the to-be-delivered goods, a warehouse-position type of each of the to-be-delivered goods is determined.

Specifically, the warehouse-position types may be categorized according to warehouse position dimensions, and are, for example, a large warehouse position and a small warehouse position. The warehouse-position types may be categorized according to a warehouse temperature, for example, a constant-temperature warehouse position and a room-temperature warehouse position. The constant-temperature warehouse position may be further categorized according to a set temperature, to obtain types corresponding to the set temperatures. Certainly, warehouse position types may be categorized according to other factors. This is not limited in the present disclosure.

After the to-be-delivered goods of the target order are determined, statistics of the warehouse-position types of the to-be-delivered goods may be collected. The to-be-delivered goods corresponding to the target order may correspond to a same warehouse position type, or may correspond to different warehouse-position types.

Specifically, the warehouse-position types of the to-be-delivered goods may be determined according to the goods identifiers of the to-be-delivered goods.

Further, when each piece of goods is stocked in a warehouse for the first time, a fifth correspondence relationship may be established according to the goods identifier of the piece of goods and the warehouse position type corresponding to the piece of goods, so that after the to-be-delivered goods are determined, the warehouse position types corresponding to the to-be-delivered goods are determined based on the goods identifiers of the to-be-delivered goods and the fifth correspondence relationship.

Further, the warehouse-position types of the storage warehouse positions of the to-be-delivered goods may be determined as the warehouse-position types corresponding to the to-be-delivered goods.

Step S503: the target warehouse position matching the warehouse-position type of the piece of to-be-delivered goods is determined according to the target operating workstation corresponding to the target order and the warehouse-position type of the piece of to-be-delivered goods.

Specifically, during allocation of the target warehouse positions to the to-be-delivered goods, warehouse positions-whose type matches the warehouse-position types corresponding to the to-be-delivered goods and that are close to the target operating workstation need to be determined as the target warehouse positions of the to-be-delivered goods according to the warehouse-position types corresponding to the to-be-delivered goods and the position of the target operating workstation corresponding to the target order.

Optionally, FIG. 6 is a flowchart of step S503 in the embodiment shown in FIG. 5 according to the present disclosure. As shown in FIG. 6, step S503 may include the following steps.

Step S5031: for to-be-delivered goods of a same warehouse-position type, candidate warehouse positions matching the warehouse-position type are determined.

The matching the warehouse-position type means that a warehouse-position type of a candidate warehouse position is the same as the warehouse-position types corresponding to the to-be-delivered goods.

Specifically, the to-be-delivered goods corresponding to the target order may correspond to a plurality of warehouse-position types, for each warehouse-position type corresponding to the target order, candidate warehouse positions matching the warehouse-position type are determined.

Step S5032: warehouse position scores of the candidate warehouse positions are determined according to the target operating workstation.

A specific manner of determining the warehouse position score of the candidate warehouse position is similar to that in a process of determining a warehouse position score of a warehouse position in the foregoing embodiment. For a specific determination process, refer to content corresponding to step S303. Details are not described herein again.

Step S5033: the candidate warehouse positions are sequentially determined as the target warehouse positions of the to-be-delivered goods in descending order of the warehouse position scores.

Specifically, after the target warehouse position of each piece of to-be-delivered goods is determined, the target warehouse position may be locked, to keep the target warehouse position from being allocated to another piece of to-be-delivered goods.

After the allocation sequence of the to-be-delivered goods is determined, the target warehouse positions of the to-be-delivered goods corresponding to the warehouse-position type may be sequentially determined from the candidate warehouse positions according to the allocation sequence in descending order of warehouse position scores.

Step S504: when the target warehouse positions of the to-be-delivered goods and storage warehouse positions of the to-be-delivered goods meet a transfer condition, the to-be-delivered goods are transported to corresponding target warehouse positions.

In this embodiment, target warehouse positions of to-be-delivered goods are determined according to two factors, that is, warehouse position types corresponding to the to-be-delivered goods corresponding to a target order and a target operating workstation corresponding to the target order, so that during inventory management, it is determined to move the to-be-delivered goods to appropriate warehouse positions, to avoid affecting the quality of goods due to inappropriate warehouse position types. In addition, warehouse positions with higher delivery efficiency are determined as the target warehouse positions of the to-be-delivered goods based on the target operating workstation, thereby improving the processing efficiency of the target order.

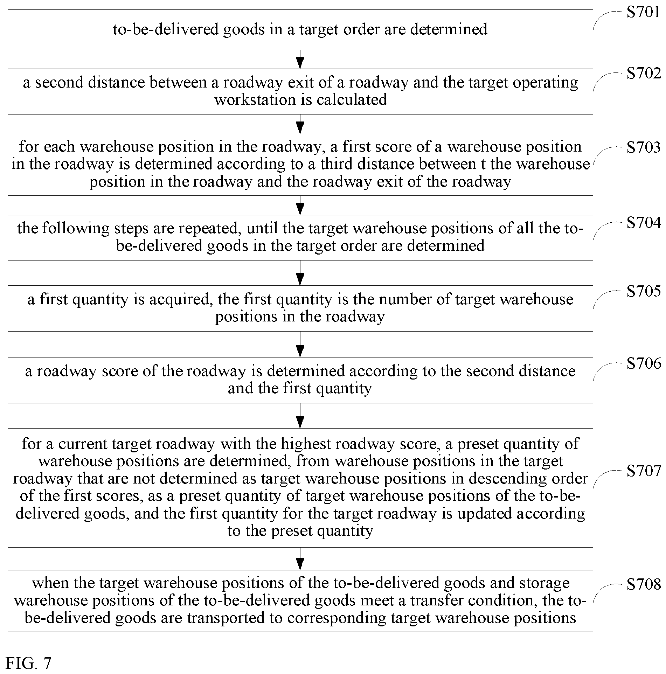

FIG. 7 is a flowchart of a goods sorting method according to another embodiment of the present disclosure. The goods sorting method provided in this embodiment further defines step S202 on the basis of the embodiment shown in FIG. 2. As shown in FIG. 7, the goods sorting method provided in this embodiment may include the following steps.

Step S701: to-be-delivered goods in a target order are determined.

Step S702: a second distance between a roadway exit of a roadway and the target operating workstation is calculated.

Step S703: for each warehouse position in the roadway, a first score of a warehouse position in the roadway is determined according to a third distance between t the warehouse position in the roadway and the roadway exit of the roadway.

The third distance may include the shortest distance by which the robot walks to move from a warehouse position to a corresponding roadway exit, and may further include a height of the warehouse position. When the first score is higher, it indicates that the third distance corresponding to the warehouse position is small, and the delivery efficiency of the warehouse position is also higher.

Specifically, after the first scores of the warehouse positions in the roadway are obtained, the warehouse positions may be sorted in descending order of first scores.

Step S704: the following steps are repeated, until the target warehouse positions of all the to-be-delivered goods in the target order are determined.

Step S705: a first quantity is acquired, the first quantity is the number of target warehouse positions in the roadway.

An initial value of the first quantity in the roadway is 0.

Step S706: a roadway score of the roadway is determined according to the second distance and the first quantity.

Specifically, a congestion coefficient of each roadway may be determined according to the first quantity. Furthermore, the roadway score of each roadway is determined according to the corresponding second distance and the corresponding congestion coefficient. When the congestion coefficient is small, the score of the roadway is higher.

Specifically, the congestion coefficient may be determined by a quantity of robots walking on a roadway during processing of the target order. The congestion coefficient may be determined according to a ratio of the first quantity to a preset quantity.

Step S707: for a current target roadway with the highest roadway score, a preset quantity of warehouse positions are determined, from warehouse positions in the target roadway that are not determined as target warehouse positions in descending order of the first scores, as a preset quantity of target warehouse positions of the to-be-delivered goods, and the first quantity for the target roadway is updated according to the preset quantity.

The preset quantity is the quantity of layers of the temporary storage shelving unit of the robot.

Specifically, the to-be-delivered goods of the target order may be divided into groups according to the preset quantity, to obtain groups of the to-be-delivered goods. A quantity of goods in the last group of to-be-delivered goods is less than or equal to the preset quantity, and quantities of goods of other groups of to-be-delivered goods are all the preset quantity. Furthermore, according to a certain sequence, the target warehouse positions are sequentially allocated to each group of to-be-delivered goods.

Specifically, from warehouse positions of a current target roadway with the highest roadway score that are not determined as the target warehouse positions, the preset quantity of warehouse positions with first scores at the top are determined as the preset quantity of target warehouse positions of the to-be-delivered goods corresponding to a current group of to-be-delivered goods.

Furthermore, the first quantity of a target roadway is updated according to the preset quantity, that is, the first quantity of the target roadway is updated to a sum of the original first quantity and the preset quantity. The roadway score of the target roadway is updated based on the updated first quantity and second distance, so as to obtain a current target roadway with the highest roadway score. In the new target roadway, the preset quantity of warehouse positions with first scores at the top are determined as the preset quantity of the target warehouse positions of the to-be-delivered goods corresponding to a next group of to-be-delivered goods.

When a quantity of goods of the last group of to-be-delivered goods is less than the preset quantity, and is, for example, a second quantity, from the current target roadway with the highest roadway score, the second quantity of warehouse positions with first scores at the top are determined as the second quantity of target warehouse positions of the to-be-delivered goods corresponding to the last group of to-be-delivered goods.

Specifically, during allocation of the target warehouse positions to the to-be-delivered goods in the target order, the roadway with the highest roadway score is preferentially selected to perform allocation. A warehouse position with the highest first score is determined from the current roadway with the highest roadway score as a target warehouse position of a current piece of to-be-delivered goods each time, and the target warehouse position is locked, until the target warehouse positions of all the to-be-delivered goods corresponding to the target order are determined.

For example, it is assumed that the warehouse system has three roadways: a roadway R1, a roadway R2, and a roadway R3. Currently, a first quantity corresponding to each roadway is 0, and roadway scores are determined by using second distances. Current roadway scores of the roadway R1, the roadway R2, and the roadway R3 are respectively 60, 75, and 82. The to-be-delivered goods in the target order are 10 pieces of goods h10, and the preset quantity is 5. In the roadway R3, warehouse positions with five first scores at the top are determined as target warehouse positions of the five pieces of goods h10. The first quantity corresponding to the roadway R3 is 5, and the roadway score of the roadway R3 is updated to 72. At present, the roadway with the highest roadway score is the roadway R2. In the roadway R2, warehouse positions with the five first scores at the top are determined as target warehouse positions of the remaining five pieces of goods h10. The target warehouse positions of the 10 pieces of goods h 10 may be determined.

Step S708: when the target warehouse positions of the to-be-delivered goods and storage warehouse positions of the to-be-delivered goods meet a transfer condition, the to-be-delivered goods are transported to corresponding target warehouse positions.

In this embodiment, roadway scores of roadways are determined based on second distances between roadway exits and a target operating workstation and first quantities of target warehouse positions in the roadways. In a target roadway with the highest roadway score, a preset quantity of warehouse positions with first scores at the top are determined as target warehouse positions of a preset quantity of to-be-delivered goods. A first score of the target roadway is updated based on the preset quantity, to obtain a new target roadway with the highest roadway score. In the target roadway, the preset quantity of warehouse positions with first scores at the top are further determined as target warehouse positions of the preset quantity of to-be-delivered goods, and the like, to obtain target warehouse positions of all the to-be-delivered goods, so that during allocation of the target warehouse positions, an allocation strategy is kept from becoming excessively complex due to excessively frequent switching of roadways, thereby reducing consumption for allocation of warehouse positions. In addition, it is ensured that current warehouse positions with the highest delivery efficiency are used as the target warehouse positions of the to-be-delivered goods, thereby improving the delivery efficiency of the to-be-delivered goods and the processing efficiency of a target order.

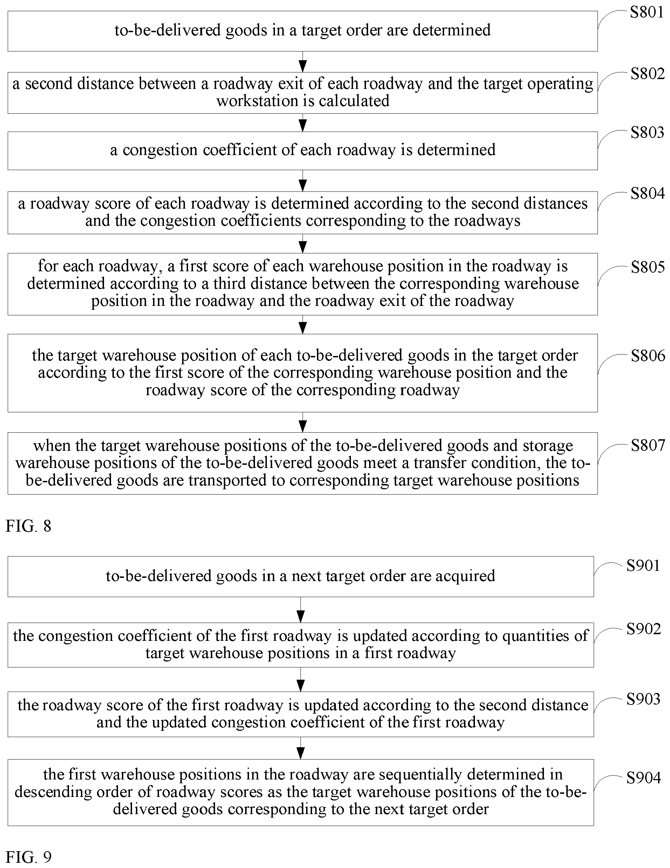

Optionally, FIG. 8 is a flowchart of a goods sorting method according to another embodiment of the present disclosure. The goods sorting method provided in this embodiment further defines step S202 on the basis of the embodiment shown in FIG. 2. As shown in FIG. 8, the goods sorting method provided in this embodiment may include the following steps.

Step S801: to-be-delivered goods in a target order are determined.

Step S802: for each roadway of the warehouse system, a second distance between a roadway exit of a roadway and the target operating workstation is calculated.

Step S803: a congestion coefficient of the roadway is determined.

When the congestion coefficient is used for describing a congestion status of a roadway during processing of target orders, and may be represented by a quantity of robots that simultaneously walk on the roadway during the processing of the target orders.

Specifically, the congestion coefficient of the roadway may be determined according to the first quantity of warehouse positions determined as the target warehouse positions in the roadway.

Further, the robot of the warehouse system includes a temporary storage shelving unit. The temporary storage shelving unit is used for temporarily storing goods carried by the robot. The temporary storage shelving unit may have a plurality of layers, for example, 5 layers, 6 layers or another number of layers. The congestion coefficient of the roadway may be estimated according to a ratio of the first quantity corresponding to the roadway to the preset quantity. When the ratio is larger, the congestion coefficient of the roadway is larger.

Step S804: a roadway score of the roadway is determined according to the second distance and the congestion coefficient.

Specifically, the roadway score may have a negative correlation relationship with the second distance, and also have a negative correlation relationship with the congestion coefficient. That is, when the second distance is smaller and the congestion coefficient is smaller, the roadway score is larger.

Step S805: for each warehouse position in the roadway, a first score of a warehouse position in the roadway is determined according to a third distance between the warehouse position in the roadway and the roadway exit of the roadway.

Step S806: the target warehouse position of the piece of to-be-delivered goods in the target order is determined according to the first score of the warehouse position and the roadway score of the roadway.

Specifically, the delivery efficiency of the warehouse positions may be calculated according to the first scores of the warehouse positions and the roadway score of the roadway to which the warehouse position belongs, and the target warehouse positions of the to-be-delivered goods corresponding to the target order are determined according to the delivery efficiency of the warehouse positions.

Further, in descending order of delivery efficiency, the warehouse positions are sequentially determined as the target warehouse positions of the to-be-delivered goods in the target order.

Optionally, the determining the target warehouse positions of the to-be-delivered goods in the target order according to the first scores of the warehouse positions and a roadway score of the roadway corresponding to the warehouse positions includes:

sequentially determining, in descending order of roadway scores, the first warehouse positions of each roadway as the target warehouse positions of the to-be-delivered goods in the target order.

The first warehouse position is a warehouse position whose first score is greater than a preset score.

Specifically, the roadways may be sorted in descending order of roadway scores, and first warehouse positions whose first score is greater than the preset score in the roadways are selected based on the preset score. First, first warehouse positions in a roadway with the highest roadway score are determined as the target warehouse positions of the to-be-delivered goods in the target order, if there are still remaining to-be-delivered goods, first warehouse positions in a roadway with the second highest roadway score are determined as the target warehouse positions of the to-be-delivered goods in the target order, and the like, until the target warehouse positions of all the to-be-delivered goods are determined.

Further, in descending order of first scores, first warehouse positions of the roadway may be sequentially determined as the target warehouse positions of the to-be-delivered goods, to preferentially consider warehouse positions with high first scores as the target warehouse positions.

Optionally, the sequentially determining, in descending order of roadway scores, first warehouse positions of each roadway as the target warehouse positions of the to-be-delivered goods in the target order includes: sequentially determining, in descending order of roadway scores and descending order of the first scores in the roadways, a corresponding quantity of first warehouse positions as the target warehouse positions of the to-be-delivered goods in the target order, and ignoring a roadway whose quantity of the first warehouse positions is 0.

Specifically, in descending order of roadway scores, first warehouse positions in each roadway may be sequentially determined as the target warehouse positions of the to-be-delivered goods, that is, the first warehouse positions in the roadway are determined as a corresponding quantity of target warehouse positions of the to-be-delivered goods. If the quantity of the first warehouse positions in the roadway is 0, the roadway is deleted, and first warehouse positions in a next roadway are determined as the target warehouse positions of the to-be-delivered goods.

For example, the preset score is 60. It is assumed that a warehouse system corresponds to three roadways: a roadway R4, a roadway R5, and a roadway R6. Roadway scores of the roadway R4, the roadway R5, and the roadway R6 are sequentially 45, 70, and 60. Quantities of first warehouse positions, that is, warehouse positions whose first score is greater than 60, corresponding to the roadway R4, the roadway R5, and the roadway R6, are sequentially 2, 5, and 8. A quantity of the to-be-delivered goods corresponding to the target order is 12. The target warehouse positions are first determined from the roadway with the highest roadway score. That is, it is determined that five first warehouse positions corresponding to the roadway R5 are target warehouse positions of five pieces of to-be-delivered goods, and the roadway R5 is further deleted. Next, the target warehouse positions are determined from a roadway with the second highest roadway score. That is, first warehouse positions with seven first scores at the top in the roadway R6 are determined as target warehouse positions of the remaining seven to-be-delivered goods.

Further, when there are a plurality of target orders, an order sequence of the target orders may be determined. For example, the order sequence of the target orders is determined based on priorities of orders, and the target warehouse positions are sequentially allocated to the to-be-delivered goods corresponding to each target order in the order sequence. After target warehouse positions of all to-be-delivered goods of a former target order in the order sequence are determined, to-be-delivered goods of a latter target order in the order sequence are acquired, target warehouse positions of the to-be-delivered goods of the latter target order are determined in a manner same as that of the former target order, and the like, until the target warehouse positions of the to-be-delivered goods corresponding to all the target orders are determined.

Step S807: when the target warehouse position of the piece of to-be-delivered goods and storage warehouse position of the piece of to-be-delivered goods meet a transfer condition, the piece of to-be-delivered goods is transported to the target warehouse position.

Optionally, FIG. 9 is a flowchart of a goods sorting method according to another embodiment of the present disclosure. This embodiment is provided for a case of a plurality of target orders. As shown in FIG. 9, the following steps are added after step S806 in this embodiment on the basis of the embodiment shown in FIG. 8.

Step S901: to-be-delivered goods in a next target order are acquired.

The next target order is also an order that needs to be processed in a future preset time period, for example, an order to be processed 12 hours later.

Specifically, when there are a plurality of target orders, target warehouse positions may be sequentially allocated to to-be-delivered goods of the target orders in an order sequence. After target warehouse positions of all to-be-delivered goods of a former target order are determined, to-be-delivered goods corresponding to a latter target order are acquired.

Step S902: the congestion coefficient of the first roadway is updated according to quantities of target warehouse positions in a first roadway.

The first roadway is a roadway that is among the roadways and in which at least one warehouse position is determined as a target warehouse position. The first roadway is a roadway used for target orders before the latter target order.

Step S903: the roadway score of the first roadway is updated according to the second distance and the updated congestion coefficient of the first roadway.

During allocation of the target warehouse positions to the to-be-delivered goods of the latter target order, congestion coefficients of previously used roadways, that is, the congestion coefficients of the first roadways, need to be updated. Furthermore, the roadway scores of the first roadways are recalculated based on the updated congestion coefficients, and the roadways are sorted in descending order of roadway scores, to obtain a new sorting result.

Step S904: the first warehouse positions in the roadway are sequentially determined in descending order of roadway scores as the target warehouse positions of the to-be-delivered goods corresponding to the next target order.

Specifically, a manner of determining the target warehouse positions of the to-be-delivered goods of the latter target order is the same as that of a specific process of the foregoing step S806, and only corresponding roadway scores are different. Details are not described herein again.

Specifically, a specific process of the goods sorting method provided in the foregoing embodiment may be as follows.

In a first step, in an order sequence, to-be-delivered goods of a target order corresponding to a current sequence are obtained. If there are no to-be-delivered goods, that is, all to-be-delivered goods have been allocated to target warehouse positions, the process ends, or otherwise, a next step continues to be performed. In a second step, roadway score of each roadway is calculated based on a second distance and congestion coefficient of each roadway, and the roadways are sorted in descending order of roadway scores. For each roadway, warehouse positions in the roadway are sorted in descending order of first scores. In a third step, a next roadway in the sequence is obtained. In a fourth step, by using a sequential matching principle, the to-be-delivered goods of the target order of a current sequence are matched one by one against the warehouse positions in the roadway, and during matching, the to-be-delivered goods and warehouse positions that have been allocated are ignored. When the warehouse positions of the roadway have been used up, the process returns to the third step. If target warehouse positions have been allocated to the to-be-delivered goods of the target order at the current position, the process returns to the first step, to allocate target warehouse positions to to-be-delivered goods of a next target order.

In this embodiment, during allocation of target warehouse positions to to-be-delivered goods of a future target order, roadway scores of roadways are calculated based on second distances and congestion coefficients of the roadways. In addition, for each roadway, first scores of warehouse positions of the roadway are calculated based on third distances between the warehouse positions and a roadway exit, to further comprehensively consider the roadway scores and the first scores of the warehouse position to allocate the target warehouse positions to the to-be-delivered goods. During specific allocation, a roadway with the highest roadway score may be preferentially considered, and warehouse positions whose first score is greater than a preset score are determined as the target warehouse positions of the to-be-delivered goods. If there are still remaining to-be-delivered goods, a roadway with the second highest roadway score is considered, and the like, to determine target warehouse positions of all the to-be-delivered goods, so that during allocation of the target warehouse positions, an allocation strategy is kept from becoming excessively complex due to excessively frequent switching of roadways, thereby reducing consumption for allocation of warehouse positions. In addition, it is ensured that current warehouse positions with the highest delivery efficiency are used as the target warehouse positions of the to-be-delivered goods, thereby improving the delivery efficiency of the to-be-delivered goods and the processing efficiency of a target order.

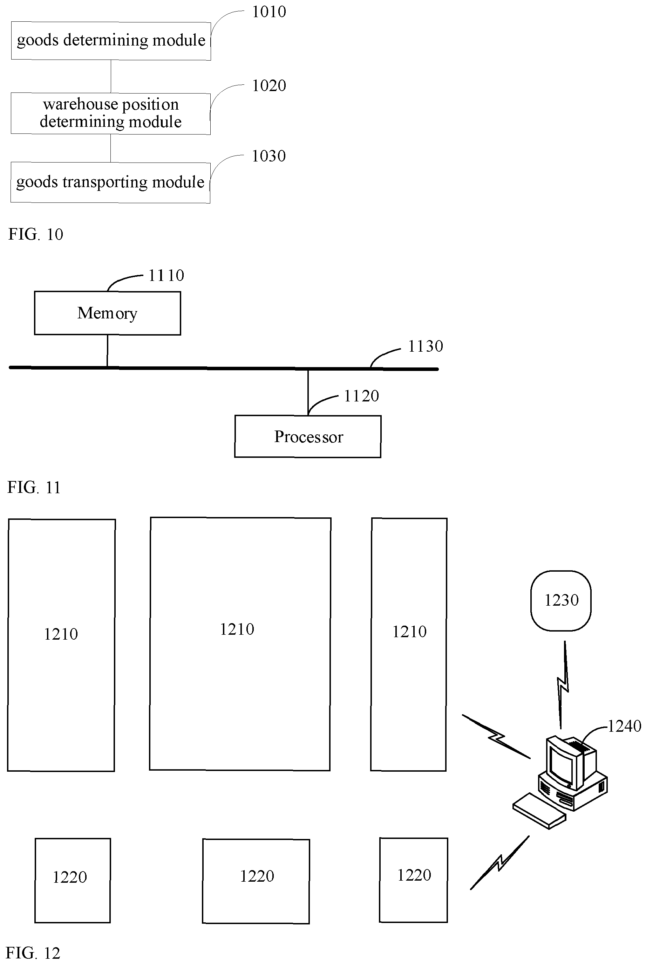

FIG. 10 is a schematic structural diagram of a goods sorting apparatus according to an embodiment of the present disclosure. As shown in FIG. 10, the apparatus is used in a warehouse system. The apparatus includes a goods determining module 1010, a warehouse position determining module 1020, and a goods transporting module 1030.

The goods determining module 1010 is configured to determine to-be-delivered goods in a target order, where the target order is an order that is to be fulfilled within a predetermined time in the future. The warehouse position determining module 1020 is configured to a target warehouse position of a piece of to-be-delivered goods according to a target operating workstation corresponding to the target order. The goods transporting module 1030 is configured to: when the target warehouse position of the piece of to-be-delivered goods and a storage warehouse position of the piece of to-be-delivered goods meet a transfer condition, transport the piece of to-be-delivered goods to the target warehouse position.

Optionally, the warehouse position determining module 1020 includes:
a warehouse position score determining unit, configured to determine a warehouse position score of each warehouse position of a warehouse system according to the target operating workstation; and a warehouse position determining unit, configured to determine the target warehouse position of the piece of to-be-delivered goods according to the warehouse position score of each warehouse position.

Optionally, the warehouse position score determining unit includes:
a first distance calculation subunit, configured to calculate a first distance between the warehouse position of the warehouse system and the target operating workstation for each warehouse position; and a warehouse position score determining subunit, configured to determine the warehouse position score of the warehouse position according to the first distance.

Optionally, the warehouse position score determining subunit is further configured to:
determining the warehouse position score of the warehouse position according to the first distance and a warehouse position height of the warehouse position.

Optionally, the warehouse position score determining unit is further configured to:
calculate a second distance between a roadway exit of a roadway and the target operating workstation for each roadway of the warehouse system, where the roadway is a passage that is between two adjacent storage shelving units and is used for a robot to walk, and each storage shelving unit includes one or more warehouse positions configured to store goods; acquire a first quantity, wherein the first quantity is the number of target warehouse position in the roadway; determine a roadway score of the roadway according to the second distance and the first quantity; and for each warehouse position, determine a warehouse position score of the warehouse position according to the roadway score of the roadway corresponding to the warehouse position and a distance between the warehouse position and the roadway exit of the roadway.

Optionally, the warehouse position determining module 1020 is further configured to:
calculate a second distance between a roadway exit of a roadway and the target operating workstation for each roadway of the warehouse system in the roadway; for each roadway of the warehouse system in the roadway, determine a first score of a warehouse position in the roadway according to a third distance between the warehouse position in the roadway and the roadway exit of the roadway; and repeat the following steps, until the target warehouse positions of all the to-be-delivered goods in the target order are determined: acquiring a first quantity, wherein the first quantity is the number of target warehouse positions in the roadway; determining a roadway score of the roadway according to the second distance and the first quantity; and for a current target roadway with the highest roadway score, determining, from warehouse positions in the target roadway that are not determined as target warehouse positions in a descending order of the first scores, a preset quantity of warehouse positions as a preset quantity of target warehouse positions of the to-be-delivered goods, and updating the first quantity for the target roadway according to the preset quantity, wherein the preset quantity is a quantity of layers of temporary storage shelving units of a robot.

Optionally, the warehouse position determining module 1020 includes:
a second distance calculation unit, configured to a second distance between a roadway exit of a roadway and the target operating workstation for each roadway of the warehouse system; a congestion coefficient determining unit, configured to determine a congestion coefficient of the roadway; a roadway score determining unit, configured to determine a roadway score of the roadway according to the second distance and the congestion coefficient; a first score determining unit, configured to: for each warehouse position in the roadway, determining a first score of a warehouse position in the roadway according to a third distance between the warehouse position in the roadway and the roadway exit of the roadway; and a target warehouse position determining unit, configured to determine the target warehouse position of the piece of to-be-delivered goods in the target order according to the first score of the warehouse position and the roadway score of the roadway.

Optionally, the target warehouse position determining unit is further configured to:

sequentially determine, in descending order of roadway scores, first warehouse positions in the roadway as the target warehouse positions of the to-be-delivered goods in the target order, wherein each first warehouse position is a warehouse position whose first score is greater than a preset score.

Optionally, the target warehouse position determining unit is further configured to:

sequentially determine, in descending order of roadway scores and descending order of the first scores in the roadways, a corresponding quantity of first warehouse positions as the target warehouse positions of the to-be-delivered goods in the target order, and ignoring a roadway whose quantity of the first warehouse positions is 0.

Optionally, the apparatus further includes:

a next order processing module, configured to: after the first warehouse positions in the roadway are sequentially determined as the target warehouse positions of the to-be-delivered goods in the target order in descending order of roadway scores, acquire to-be-delivered goods in a next target order; update the congestion coefficient of the first roadway according to quantities of target warehouse positions in a first roadway, where the first roadway is a roadway that is among the roadways and in which at least one warehouse position is determined as a target warehouse position; update the roadway score of the first roadway according to the second distance and the updated congestion coefficient of the first roadway; and sequentially determine, in descending order of roadway scores, the first warehouse positions in the roadway as the target warehouse positions of the to-be-delivered goods corresponding to the next target order.

Optionally, the apparatus further includes:

a type determining module, configured to determine a warehouse-position type of each of the to-be-delivered goods for each of the to-be-delivered goods .

Correspondingly, the warehouse position determining module 1020 is further configured to:

determine, according to the target operating workstation corresponding to the target order and the warehouse-position type of the piece of to-be-delivered goods, the target warehouse position matching the warehouse-position type of the piece of to-be-delivered goods.

Optionally, the warehouse position determining module 1020 is further configured to:

for to-be-delivered goods of a same warehouse-position type, determining candidate warehouse positions matching the warehouse-position type; determine warehouse position scores of the candidate warehouse positions according to the target operating workstation; and sequentially determine, in descending order of the warehouse position scores, the candidate warehouse positions as the target warehouse positions of the to-be-delivered goods.

Optionally, the apparatus further includes:

an allocation sequence of the to-be-delivered goods in the target order, so as to sequentially allocate target warehouse positions to the to-be-delivered goods in the target order based on the allocation sequence.

Optionally, the goods determining module 1010 is further configured to:

determine the to-be-delivered goods in the target order according to an order requirement of the target order and the target operating workstation corresponding to the target order.

Optionally, the apparatus further includes:

an operating workstation determining module, configured to determine the target operating workstation of the target order according to a production line corresponding to the target order.

Optionally, the apparatus further includes:

an occupying goods take-out module, configured to: if the target warehouse position of the piece of to-be-delivered goods is occupied by a piece of occupying goods, control the robot to take out the piece of occupying goods from the target warehouse position.

Correspondingly, the goods transporting module 1030 is further configured to:

when the target warehouse position of a piece of to-be-delivered goods and the storage warehouse position of the piece of to-be-delivered goods are not a same warehouse position, after the occupying goods are taken out, control the robot to store the piece of to-be-delivered goods at the target warehouse position.

Optionally, the apparatus further includes:

an occupying goods warehouse position allocation module, configured to: after the to-be-delivered goods are stored at the target warehouse positions, allocate a new warehouse position to the piece of occupying goods, so as to store the piece of occupying goods at the new warehouse position.

The goods sorting apparatus provided in the embodiments of the present disclosure may perform the goods sorting method provided in any embodiment of the present disclosure, and has functional modules and beneficial effects corresponding to the performed method.

FIG. 11 is a schematic structural diagram of a goods sorting device according to an embodiment of the present disclosure. As shown in FIG. 11, the goods sorting device includes a memory 1110, a processor 1120, and a computer program.

The computer program is stored in the memory 1110, and is configured to be executed by the processor 1120 to implement the goods sorting method provided in any embodiment in the embodiments corresponding to FIG. 2 to FIG. 9 of the present disclosure.

The memory 1110 is connected to the processor 1120 by a bus 1130.

For related description, correspondingly refer to related description and effects corresponding to the steps in FIG. 2 to FIG. 9 for understanding. Details are not described again herein.

FIG. 12 is a schematic structural diagram of a warehouse system according to an embodiment of the present disclosure. As shown in FIG. 12, the warehouse system includes a warehouse shelving unit 1210, an operating workstation 1220, a robot 1230, and a goods sorting device 1240.

The goods sorting device 1240 is the goods sorting device provided in the embodiment shown in FIG. 11 of the present disclosure.

In some embodiments, the warehouse system further includes apparatuses such as an unloader, an elevator, and a conveyor line.

An embodiment of the present disclosure provides a computer-readable storage medium, having a computer program stored therein. The computer program, when being executed by a processor, implements the goods sorting method provided in any embodiment in the embodiments corresponding to FIG. 2 to FIG. 9 of the present disclosure.

The computer-readable storage medium may be a ROM, a random access memory (RAM), a CD-ROM, a magnetic tape, a floppy disk, an optical data storage device, or the like.

The present disclosure further provides a program product. The program product includes an executable computer program. The executable computer program is stored in a readable storage medium. At least one processor of the goods sorting device or the warehouse system may read the computer program from the readable storage medium. The at least one processor executes the computer program to cause the goods sorting apparatus to implement the goods sorting method provided in the foregoing various implementations.

In the several embodiments provided in the present disclosure, it should be understood that the disclosed device and method may be implemented in other manners. For example, the device embodiments described above are merely exemplary. For example, the division of the modules is merely the division of logic functions, and may use other division manners during actual implementation. For example, a plurality of modules may be combined, or may be integrated into another system, or some features may be omitted or skipped. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate components may or may not be physically separated, and the components displayed as units may or may not be physical modules, and may be located in one place or may be distributed over a plurality of network units. Some or all of the modules may be selected according to actual needs to achieve the objectives of the solutions of the embodiments.

In addition, functional modules in the embodiments of the present disclosure may be integrated into one processing unit, or each of the modules may be physically separated, or two or more modules may be integrated into one unit. The module may be implemented in the form of hardware, or may be implemented in a form of a hardware plus software functional unit.

The foregoing integrated module implemented in the form of a software function module may be stored in a computer-readable storage medium. The foregoing software function module is stored in a storage medium and includes several instructions for instructing a computer device (which may be a personal computer, a server, a network device, or the like) or a processor to perform some steps of the methods in the embodiments of the present disclosure.

It should be understood that, the foregoing processor may be a central processing unit (CPU), or another general-purpose processor, a digital signal processor (DSP), an application specific integrated circuit (ASIC), or the like. The general-purpose processor may be a microprocessor, or the processor may be any conventional processor or the like. The steps of the methods disclosed with reference to the present disclosure may be directly performed and completed by using a hardware processor, or may be performed and completed by using a combination of hardware and software modules in the processor.

The memory may include a high-speed RAM, or may further include a non-volatile memory (NVM), for example, at least one magnetic disk memory, or may further be a USB flash drive, a removable hard disk, a read-only memory, a magnetic disk, an optical disc, or the like.

The bus may be an industry standard architecture (ISA) bus, a peripheral component interconnect (PCI) bus, an extended industry standard architecture (EISA) bus, or the like. The bus may be classified as an address bus, a data bus, a control bus, or the like. For ease of representation, the bus in the accompanying drawings of the present disclosure does not limit that there is only one bus or one type of bus.

The foregoing storage medium may be implemented by any type volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc. The storage medium may be any available medium accessible to a general-purpose or dedicated computer.

For example, a storage medium is coupled to a processor, so that the processor can read information from the storage medium or write information into the storage medium. Certainly, the storage medium may be a component of the processor. The processor and the storage medium may be located in an application-specific integrated circuit (ASIC). Certainly, the processor and the storage medium may be used as discrete assemblies existing in an electronic device or a main control device.

A person of ordinary skill in the art may understand that all or some of the steps of the method embodiments may be implemented by a program instructing relevant hardware. The program may be stored in a computer-readable storage medium. When the program is run, the steps of the method embodiments are performed. The foregoing storage medium includes any medium that can store program code, such as a ROM, a RAM, a magnetic disk, or an optical disc.

Finally, it should be noted that the foregoing embodiments are merely used for describing the technical solutions of the present disclosure, but are not intended to limit the present disclosure. Although the present disclosure is described in detail with reference to the foregoing embodiments, it should be appreciated by a person skilled in the art that, modifications may still be made to the technical solutions recorded in the foregoing embodiments, or equivalent replacements may be made to the part of all of the technical features; and these modifications or replacements will not cause the essence of corresponding technical solutions to depart from the scope of the technical solutions in the embodiments of the present disclosure.

**Claims**

1. A goods sorting method, comprising:

   determining to-be-delivered goods in a target order, wherein the target order is an order that is to be fulfilled within a predetermined time in the future;
   determining a target warehouse position of a piece of to-be-delivered goods according to a target operating workstation corresponding to the target order; and
   when the target warehouse position of the piece of to-be-delivered goods and a storage warehouse position of the piece of to-be-delivered goods meet a transfer condition, transporting the piece of to-be-delivered goods to the target warehouse position, wherein the storage warehouse position is a warehouse position at which the piece of to-be-delivered goods is currently stored.

2. The method according to claim 1, wherein the determining a target warehouse position of a piece to-be-delivered goods according to a target operating workstation corresponding to the target order comprises:

   determining a warehouse position score of each warehouse position of a warehouse system according to the target operating workstation; and determining the target warehouse position of the piece of to-be-delivered goods according to the warehouse position score of each warehouse position.

3. The method according to claim 2, wherein the determining a warehouse position score of each warehouse position of a warehouse system according to the target operating workstation comprises:

   for each warehouse position, calculating a first distance between the warehouse position of the warehouse system and the target operating workstation; and
   determining the warehouse position score of the warehouse position according to the first distance.

4. The method according to claim 3, wherein the determining the warehouse position score of the warehouse position according to the first distance comprises:
   determining the warehouse position score of the warehouse position according to the first distance and a warehouse position height of the warehouse position.

5. The method according to claim 2, wherein the determining a warehouse position score of each warehouse position of a warehouse system according to the target operating workstation comprises:

   for each roadway of the warehouse system, calculating a second distance between a roadway exit of a roadway and the target operating workstation, wherein the roadway is a passage that is between two adjacent storage shelving units and is used for a robot to walk, and each storage shelving unit comprises one or more warehouse positions configured to store goods;
   acquiring a first quantity, wherein the first quantity is the number of the target warehouse position in the roadway;
   determining a roadway score of the roadway according to the second distance and the first quantity; and

for each warehouse position, determining a warehouse position score of the warehouse position according to the roadway score of the roadway corresponding to the warehouse position and a distance between the warehouse position and the roadway exit of the roadway.

6. The method according to claim 1, wherein the determining a target warehouse position of the piece of to-be-delivered goods according to a target operating workstation in the target order comprises:

for each roadway of the warehouse system in the roadway, calculating a second distance between a roadway exit of a roadway and the target operating workstation;

for each warehouse position in the roadway, determining a first score of a warehouse position in the roadway according to a third distance between the warehouse position in the roadway and the roadway exit of the roadway; and

repeating the following steps, until the target warehouse positions of all the to-be-delivered goods in the target order are determined:

acquiring a first quantity, wherein the first quantity is the number of target warehouse positions in the roadway;

determining a roadway score of the roadway according to the second distance and the first quantity; and

for a current target roadway with the highest roadway score, determining, from warehouse positions in the target roadway that are not determined as target warehouse positions in a descending order of the first scores, a preset quantity of warehouse positions as a preset quantity of target warehouse positions of the to-be-delivered goods, and updating the first quantity for the target roadway according to the preset quantity, wherein the preset quantity is a quantity of layers of temporary storage shelving units of a robot.

7. The method according to claim 1, wherein the determining a target warehouse position of a piece of to-be-delivered goods according to a target operating workstation corresponding to the target order comprises:

for each roadway of the warehouse system, calculating a second distance between a roadway exit of a roadway and the target operating workstation;

determining a congestion coefficient of the roadway;

determining a roadway score of the roadway according to the second distance and the congestion coefficient;

for each warehouse position in the roadway, determining a first score of a warehouse position in the roadway according to a third distance between the warehouse position in the roadway and the roadway exit of the roadway; and

determining the target warehouse position of the piece of to-be-delivered goods in the target order according to the first score of the warehouse position and the roadway score of the roadway.

8. The method according to claim 7, wherein the determining the target warehouse position of the piece of to-be-delivered goods in the target order according to the first score of the warehouse position and the roadway score of the roadway comprises:

sequentially determining, in descending order of roadway scores, first warehouse positions in the roadway as the target warehouse positions of the to-be-delivered goods in the target order, wherein each first warehouse position is a warehouse position whose first score is greater than a preset score.

9. The method according to claim 8, wherein the sequentially determining, in descending order of roadway scores, first warehouse positions in the roadway as the target warehouse positions of the to-be-delivered goods in the target order comprises:

sequentially determining, in descending order of roadway scores and descending order of the first scores in the roadways, a corresponding quantity of first warehouse positions as the target warehouse positions of the to-be-delivered goods in the target order, and ignoring a roadway whose quantity of the first warehouse positions is 0.

10. The method according to claim 8, wherein after the sequentially determining, in descending order of roadway scores, first warehouse positions in the roadway as the target warehouse positions of the to-be-delivered goods in the target order, the method further comprises:

acquiring to-be-delivered goods in a next target order;

updating the congestion coefficient of the first roadway according to quantities of target warehouse positions in a first roadway, wherein the first roadway is a roadway that is among the roadways and in which at least one warehouse position is determined as a target warehouse position;

updating the roadway score of the first roadway according to the second distance and the updated congestion coefficient of the first roadway; and

sequentially determining, in descending order of roadway scores, the first warehouse positions in the roadway as the target warehouse positions of the to-be-delivered goods corresponding to the next target order.

11. The method according to claim 1, further comprising:

for each of the to-be-delivered goods, determining a warehouse-position type of each of the to-be-delivered goods; and
correspondingly, the determining a target warehouse position of a piece of to-be-delivered goods according to a target operating workstation corresponding to the target order comprises:
determining, according to the target operating workstation corresponding to the target order and the warehouse-position type of the piece of to-be-delivered goods, the target warehouse position matching the warehouse-position type of the piece of to-be-delivered goods.

12. The method according to claim 11, wherein the determining, according to the target operating workstation corresponding to the target order and the warehouse-position type of the piece of to-be-delivered goods, the target warehouse position matching the warehouse- position type of the piece of to-be-delivered goods comprises:

for to-be-delivered goods of a same warehouse-position type, determining candidate warehouse positions matching the warehouse-position type;
determining warehouse position scores of the candidate warehouse positions according to the target operating workstation; and
sequentially determining, in descending order of the warehouse position scores, the candidate warehouse positions as the target warehouse positions of the to-be-delivered goods.

13. The method according to any one of claims 1 to 12, further comprising:
determining an allocation sequence of the to-be-delivered goods in the target order, so as to sequentially allocate target warehouse positions to the to-be-delivered goods in the target order based on the allocation sequence.

14. The method according to any one of claims 1 to 12, wherein that the target warehouse position of the piece of to-be-delivered goods and a storage warehouse position of the piece of to-be-delivered goods meet a transfer condition comprises:

the target warehouse position of the piece of to-be-delivered goods and the storage warehouse position of the piece of to-be-delivered goods are not in a same roadway; or
the target warehouse position of the piece of to-be-delivered goods exceed a preset range of the storage warehouse position of the piece of to-be-delivered goods; or
the target warehouse position of a piece of to-be-delivered goods and the storage warehouse position of the piece of to-be-delivered goods are not a same warehouse position.

15. The method according to any one of claims 1 to 12, wherein the determining to-be-delivered goods in a target order comprises:
determining the to-be-delivered goods in the target order according to an order requirement of the target order and the target operating workstation corresponding to the target order.

16. The method according to any one of claims 1 to 12, further comprising:
determining the target operating workstation of the target order according to a production line corresponding to the target order.

17. The method according to any one of claims 1 to 12, wherein when the target warehouse position of the piece of to-be-delivered goods is occupied by a piece of occupying goods, the method further comprises:

controlling the robot to take out the piece of occupying goods from the target warehouse position; and
correspondingly, the transporting the piece of to-be-delivered goods to the target warehouse position comprises:
after the piece of occupying goods is taken out, controlling the robot to store the piece of to-be-delivered goods at the target warehouse position.

18. The method according to claim 17, wherein after the piece of to-be-delivered goods is stored at the target warehouse position, the method further comprises:
allocating a new warehouse position to the piece of occupying goods, so as to store the piece of occupying goods at the new warehouse position.

19. A goods sorting apparatus, wherein the apparatus comprises:

a goods determining module, configured to determine to-be-delivered goods in a target order, wherein the target order is an order that is to be fulfilled within a predetermined time in the future;
a warehouse position determining module, configured to determine target warehouse positions of the to-be-delivered goods according to a target operating workstation corresponding to the target order; and

a goods transporting module, configured to: when the target warehouse positions of the to-be-delivered goods and storage warehouse positions of the to-be-delivered goods are inconsistent, transport the to-be-delivered goods to corresponding target warehouse positions.

20. A goods sorting device, comprising:

a memory configured to store computer-executable instructions; and

at least one processor configured to execute the computer-executable instructions stored in the memory, wherein when the computer-executable instructions are executed by the processor, the processor is configured to perform the goods sorting method according to any one of claims 1 to 18.

21. A warehouse system, comprising a warehouse shelving unit, an operating workstation, a robot, and the goods sorting device according to claim 21.

22. A computer-readable storage medium, configured to store computer-executable instructions, when executing the computer-executable instructions, a processor is configured to implement the goods sorting method according to any one of claims 1 to 18.

23. A computer program product, comprising a computer program, wherein the computer program, when being executed by a processor, is configured to implement the goods sorting method according to any one of claims 1 to 18.

110

110

120

110

111

Operating
workstation
130

FIG. 1

to-be-delivered goods in a target order are determined — S201

a target warehouse position of a piece of to-be-delivered goods is
determined according to a target operating workstation corresponding
to the target order — S202

when the target warehouse position of the piece of to-be-delivered
goods and storage warehouse position of the piece of to-be-delivered
goods meet a transfer condition, the piece of to-be-delivered goods is
transported to the target warehouse position — S203

FIG. 2

```
┌─────────────────────────────────────────────────────────────────┐
│ a target operating workstation of a target order according to a   │ ⌐ S301
│ production line corresponding to the target order is determined   │
└─────────────────────────────────────────────────────────────────┘
                                │
                                ▼
┌─────────────────────────────────────────────────────────────────┐
│ to-be-delivered goods in the target order are determined          │ ⌐ S302
│ according to an order requirement of the target order and the     │
│ target operating workstation corresponding to the target order    │
└─────────────────────────────────────────────────────────────────┘
                                │
                                ▼
┌─────────────────────────────────────────────────────────────────┐
│ a warehouse position score of each warehouse position of a        │ ⌐ S303
│ warehouse system is determined according to the target operating  │
│ workstation                                                       │
└─────────────────────────────────────────────────────────────────┘
                                │
                                ▼
┌─────────────────────────────────────────────────────────────────┐
│ the target warehouse position of the piece of to-be-delivered     │ ⌐ S304
│ goods are determined according to the warehouse position score    │
│ of the warehouse position                                         │
└─────────────────────────────────────────────────────────────────┘
                                │
                                ▼
┌─────────────────────────────────────────────────────────────────┐
│ when the target warehouse position of the piece of to-be-         │
│ delivered goods and the storage warehouse position of the piece   │
│ of to-be-delivered goods meet a transfer condition and a target   │
│ warehouse position is occupied by a piece of occupying goods, a   │ ⌐ S305
│ robot is controlled to take out the piece of occupying goods from │
│ the target warehouse position, and after the piece of occupying   │
│ goods is taken out, the robot is controlled to store the piece of │
│ to-be-delivered goods at the target warehouse position           │
└─────────────────────────────────────────────────────────────────┘
                                │
                                ▼
┌─────────────────────────────────────────────────────────────────┐
│ a new warehouse position is allocated to the piece of occupying   │ ⌐ S306
│ goods, so as to store the piece of occupying goods at the new     │
│ warehouse position                                                │
└─────────────────────────────────────────────────────────────────┘
```

FIG. 3

```
┌─────────────────────────────────────────────────────────────────┐
│ for each roadway of the warehouse system, a second distance       │ ⌐ S5031
│ between a roadway exit of a roadway of the warehouse system and    │
│ the target operating workstation is calculated                    │
└─────────────────────────────────────────────────────────────────┘
                                │
                                ▼
┌─────────────────────────────────────────────────────────────────┐
│ a first quantity is acquired, the first quantity is the number of  │ ⌐ S5032
│ the target warehouse position in the roadway                       │
└─────────────────────────────────────────────────────────────────┘
                                │
                                ▼
┌─────────────────────────────────────────────────────────────────┐
│ a roadway score of the roadway is determined according to the      │ ⌐ S5033
│ second distance and the first quantity                            │
└─────────────────────────────────────────────────────────────────┘
                                │
                                ▼
┌─────────────────────────────────────────────────────────────────┐
│ for each warehouse position, a warehouse position score of the     │ ⌐ S5034
│ warehouse position is determined according to the roadway score    │
│ of the roadway corresponding to the warehouse position and a       │
│ distance between the warehouse position and the roadway exit of    │
│ the corresponding roadway                                         │
└─────────────────────────────────────────────────────────────────┘
```

FIG. 4

| to-be-delivered goods in a target order are determined | S501 |

| for each of the to-be-delivered goods, a warehouse-position type of each of the to-be-delivered goods is determined | S502 |

| the target warehouse position matching the warehouse-position type of the piece of to-be-delivered goods is determined according to the target operating workstation corresponding to the target order and the warehouse-position type of the piece of to-be-delivered goods | S503 |

FIG. 5

| for to-be-delivered goods of a same warehouse-position type, candidate warehouse positions matching the warehouse-position type are determined | S5031 |

| warehouse position scores of the candidate warehouse positions are determined according to the target operating workstation | S5032 |

| the candidate warehouse positions are sequentially determined as the target warehouse positions of the to-be-delivered goods in descending order of the warehouse position scores | S5033 |

FIG. 6

to-be-delivered goods in a target order are determined — S701

↓

a second distance between a roadway exit of a roadway and the target operating workstation is calculated — S702

↓

for each warehouse position in the roadway, a first score of a warehouse position in the roadway is determined according to a third distance between t the warehouse position in the roadway and the roadway exit of the roadway — S703

↓

the following steps are repeated, until the target warehouse positions of all the to-be-delivered goods in the target order are determined — S704

↓

a first quantity is acquired, the first quantity is the number of target warehouse positions in the roadway — S705

↓

a roadway score of the roadway is determined according to the second distance and the first quantity — S706

↓

for a current target roadway with the highest roadway score, a preset quantity of warehouse positions are determined, from warehouse positions in the target roadway that are not determined as target warehouse positions in descending order of the first scores, as a preset quantity of target warehouse positions of the to-be-delivered goods, and the first quantity for the target roadway is updated according to the preset quantity — S707

↓

when the target warehouse positions of the to-be-delivered goods and storage warehouse positions of the to-be-delivered goods meet a transfer condition, the to-be-delivered goods are transported to corresponding target warehouse positions — S708

FIG. 7

to-be-delivered goods in a target order are determined — S801

a second distance between a roadway exit of each roadway and the target operating workstation is calculated — S802

a congestion coefficient of each roadway is determined — S803

a roadway score of each roadway is determined according to the second distances and the congestion coefficients corresponding to the roadways — S804

for each roadway, a first score of each warehouse position in the roadway is determined according to a third distance between the corresponding warehouse position in the roadway and the roadway exit of the roadway — S805

the target warehouse position of each to-be-delivered goods in the target order according to the first score of the corresponding warehouse position and the roadway score of the corresponding roadway — S806

when the target warehouse positions of the to-be-delivered goods and storage warehouse positions of the to-be-delivered goods meet a transfer condition, the to-be-delivered goods are transported to corresponding target warehouse positions — S807

FIG. 8

to-be-delivered goods in a next target order are acquired — S901

the congestion coefficient of the first roadway is updated according to quantities of target warehouse positions in a first roadway — S902

the roadway score of the first roadway is updated according to the second distance and the updated congestion coefficient of the first roadway — S903

the first warehouse positions in the roadway are sequentially determined in descending order of roadway scores as the target warehouse positions of the to-be-delivered goods corresponding to the next target order — S904

FIG. 9

goods determining module —— 1010

warehouse position
determining module —— 1020

goods transporting module —— 1030

FIG. 10

Memory —— 1110

—— 1130

—— 1120

Processor

FIG. 11

1210

1210

1210

1230

1240

1220

1220

1220

FIG. 12

## INTERNATIONAL SEARCH REPORT

| International application No. |
| --- |
| **PCT/CN2022/108041** |

**A. CLASSIFICATION OF SUBJECT MATTER**

G06Q 10/08(2012.01)i; G06Q 10/04(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNTXT, ENTXT, CNKI, DWPI: 货物, 仓库, 订单, 目标, 出库, 整理, goods, cargo, storag+, warehous+, order, target, deliver +, arrang+

**C. DOCUMENTS CONSIDERED TO BE RELEVANT**

| Category* | Citation of document, with indication, where appropriate, of the relevant passages | Relevant to claim No. |
| --- | --- | --- |
| X | CN 110363476 A (SHANGHAI TIANJI INFORMATION TECHNOLOGY CO., LTD.) 22 October 2019 (2019-10-22) <br> see description, paragraphs 40-85, and figures 1-4 | 1, 19-23 |
| A | CN 113269494 A (SHENZHEN KUBAO SOFTWARE CO., LTD.) 17 August 2021 (2021-08-17) <br> see entire document | 1-23 |
| A | CN 111340423 A (SHANGHAI MINGLUE AI (GROUP) CO., LTD.) 26 June 2020 (2020-06-26) <br> see entire document | 1-23 |
| A | CN 113034078 A (SHENZHEN HAIROU INNOVATION TECHNOLOGY CO., LTD.) 25 June 2021 (2021-06-25) <br> see entire document | 1-23 |
| A | JP 2009067588 A (KASA KATSUAKI) 02 April 2009 (2009-04-02) <br> see entire document | 1-23 |
| A | WO 0165428 A2 (PARTS LOGISTICS MANAGEMENT CORP.) 07 September 2001 (2001-09-07) <br> see entire document | 1-23 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 October 2022** | **31 October 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2022/108041** |

| Patent document cited in search report | | | Publication date (day/month/year) | Patent family member(s) | | | Publication date (day/month/year) |
|---|---|---|---|---|---|---|---|
| CN | 110363476 | A | 22 October 2019 | None | | | |
| CN | 113269494 | A | 17 August 2021 | None | | | |
| CN | 111340423 | A | 26 June 2020 | None | | | |
| CN | 113034078 | A | 25 June 2021 | None | | | |
| JP | 2009067588 | A | 02 April 2009 | None | | | |
| WO | 0165428 | A2 | 07 September 2001 | AU | 4038901 | A | 12 September 2001 |

Form PCT/ISA/210 (patent family annex) (January 2015)

## REFERENCES CITED IN THE DESCRIPTION

**Patent documents cited in the description**

- CN 202111015111